(19) Europäisches Patentamt

European Patent Office

Office européen des brevets

(11) **EP 2 017 641 A1**

(12) **EUROPÄISCHE PATENTANMELDUNG**

(43) Veröffentlichungstag:
21.01.2009  Patentblatt 2009/04

(51) Int Cl.:
*G01S 5/28* ^(2006.01)

(21) Anmeldenummer: 08010554.7

(22) Anmeldetag: 11.06.2008

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(30) Priorität: 20.07.2007  DE 102007034054

(71) Anmelder: ATLAS Elektronik GmbH
28309 Bremen (DE)

(72) Erfinder:
• Plümecke, Gerrit Dipl.-Ing.
28357 Bremen (DE)
• Schaumburg, Udo Dipl.-Ing.
27801 Brettorf (DE)

(74) Vertreter: Wasiljeff, Johannes M.B.
Jabbusch Arendt & Siekmann
Patentanwälte
Otto-Lilienthal-Straße 25
28199 Bremen (DE)

(54) **Verfahren zum passiven Bestimmen wenigstens der Entfernung zu und der Position von einem schallabstrahlenden Ziel sowie Sonaranlage**

(57)   Die Erfindung betrifft ein Verfahren zum passiven Bestimmen von wenigstens der Entfernung zu und der Position von einem schallabstrahlenden Ziel 11 unter Verwendung einer einem ersten Sonarteilsystem 21 zugeordneten ersten Empfangsantenne 12 mit einer Vielzahl von entlang einer Linie angeordneten elektroakustischen Wandlern zum Empfangen von Schallwellen und Erzeugen von elektrischen Empfangssignalen. Um einen Entfernungsschätzwert zu ermitteln, wird die erste Empfangsantenne 12 vertikal ausgerichtet und ein in einer Vertikalebene liegender Elevationswinkel $\xi 2$ zwischen einer Horizontalebene und einem Ziel 11 bestimmt. Auf diese Weise erhält man ein erstes, in Elevation auflösendes Sonarteilsystem 21. Ferner wird eine zweite Empfangsantenne 23 eines zweiten Sonarteilsystems 22 verwendet, die ebenfalls eine Vielzahl elektroakustischer Wandler aufweist. Dieses zweite Sonarteilsystem 22 ist ein in Azimut auflösendes Sonarteilsystem, mit dem ein in einer Horizontalebene 15 liegender horizontaler Peilwinkel zwischen einer in der Horizontalebene liegenden Bezugsrichtung und einem Ziel 11 bestimmt wird. Aus dem Elevationswinkel $\xi 2$ und einer vertikalen Lage, insbesondere der Tauchtiefe, des Ziels wird unter Berücksichtigung der Tiefe T+D des akustischen Schwerpunkts 16 der ersten Empfangsantenne 12 ein Schätzwert einer Entfernung A zum Ziel 11 ermittelt. Aus dem Entfernungsschätzwert und dem horizontalen Peilwinkel wird dann die Position des Ziels bestimmt.

Die Erfindung betrifft ferner eine entsprechend ausgebildete Sonaranlage 20.

*Fig. 1*

**Beschreibung**

Die Erfindung betrifft ein Verfahren zum passiven Bestimmen von wenigstens der Entfernung zu und der Position von einem schallabstrahlenden Ziel nach dem Oberbegriff von Anspruch 1. Ferner betrifft die Erfindung eine Sonaranlage nach dem Oberbegriff von Anspruch 8.

In der Wasserschalltechnik werden Sonaranlagen an Wasserfahrzeugen mit verschiedenen Antennen und den Antennen zugeordneten Sonarteilsystemen eingesetzt, um über große Entfernung Ziele zu detektieren und zu peilen. Neben der Zielpeilung ist jedoch auch die Zielentfernung von Bedeutung.

Aus DE 198 25 271 C1 ist ein Verfahren zur Bestimmung der Zielentfernung bekannt. Dieses Verfahren verwendet eine üblicherweise zum Ermitteln der Peilung verwendete Linearantenne nebst zugehöriger Signalverarbeitung auch für die Entfernungsbestimmung. Hierzu werden Fokussignale gebildet, deren Brennpunkte auf einem Peilstrahl zum Ziel aufgereiht sind. Das Fokussignal mit dem höchsten Wert kennzeichnet den Ort des Ziels. Auf diese Weise lässt sich die Entfernung zum Ziel bestimmen.

Ein weiteres Verfahren zum Bestimmen der Entfernung zu einem Ziel ist aus US 4 910 719 bekannt. Dort wird eine Wandleranordnung verwendet, bei der drei Sensoren in vorgegebenem Abstand zueinander längs einer Linie an einer Seite eines Unterwasserfahrzeuges angeordnet sind. Jede gekrümmte Wellenfront einfallender Schallwellen erreicht die drei Sensoren mit Zeitdifferenzen, die abhängig von der Entfernung des Fahrzeugs und der Einfallsrichtung der Schallwellen sind. Aus den durch Korrelation ermittelten Zeitdifferenzen wird der Ort des Ziels nach Entfernung und Peilung ermittelt.

Die Zielentfernung wird herkömmlicherweise ferner mittels einer Kreuzpeilung bestimmt, die mit Hilfe einer vom Wasserfahrzeug nachgeschleppten Schleppantenne großer Länge und einer am Wasserfahrzeug installierten Seitenantenne, auch flank array genannt, durchgeführt wird. Das akustische Zentrum einer derartigen Schleppantenne befindet sich dabei im Wesentlichen in der gleichen Wassertiefe, wie das entsprechende akustische Zentrum der Seitenantenne, da die Schleppantenne im Wesentlichen horizontal hinter dem Wasserfahrzeug hergeschleppt wird.

Eine derartige Schleppantenne wird an einem Seil hinter dem Wasserfahrzeug nachgeschleppt. Ihr akustischer Schwerpunkt liegt in einem bekannten Abstand hinter der fest am Wasserfahrzeug installierten Seitenantenne. Aufgrund dieses Abstandes können mittels der beiden Antennensysteme zwei unterschiedliche Peilwinkel zu einem Ziel ermittelt werden, so dass in Kenntnis des Antennenabstandes und der beiden unterschiedlichen Peilwinkel die Zielentfernung abgeschätzt werden kann.

Ferner verwendet man zur Durchführung von Kreuzpeilungen auch nur Abschnitte der Seitenantenne, um durch die Verwendung unterschiedlicher Abschnitte mehrere Teilantennen zu bilden, die wiederum voneinander beabstandete akustische Schwerpunkte aufweisen. Die Genauigkeit einer derartigen Kreuzpeilung und damit Zielentfernungsschätzung nimmt jedoch mit der Entfernung des Ziels von der Empfangsantenne signifikant ab, da die Entfernung der Teilantennen einer Seitenantenne gering ist.

Die Schleppantenne wird jedoch üblicherweise nur bei einem fahrenden Wasserfahrzeug zur Peilung, insbesondere zur Kreuzpeilung eingesetzt, da sie bei einem ruhenden Wasserfahrzeug aufgrund ihres schweren Schwanzstücks absinkt. Das Schwanzstück der Schleppantenne ist nämlich mit besonderen Gewichten versehen, um die Schleppantenne zu stabilisieren. Insbesondere soll damit die Schleppantenne während des fahrenden Betriebs des Wasserfahrzeuges gestreckt gehalten werden, damit die Schleppantenne möglichst eine gerade Ausrichtung aufweist. Ohne ein derartiges schweres Schwanzstück besteht nämlich die Gefahr, dass die Schleppantenne eine wellenartige Struktur einnimmt, wodurch jedoch die von der Schleppantenne empfangenen Signale nicht mehr richtig ausgewertet werden können.

Dieses beschwerte Schwanzstück hat jedoch den Nachteil, dass es bei einem stehenden Wasserfahrzeug die Schleppantenne in die Tiefe zieht. Da die Schleppantenne und die damit verbundene Sonaranlage jedoch auf eine horizontale Ausrichtung der Schleppantenne konzipiert sind, sind die von einer in die Tiefe abgesunkene Schleppantenne erhaltenen Empfangssignale mit herkömmlichen Sonaranlagen nicht mehr aussagekräftig auswertbar. Die von der Schleppantenne gebildeten Richtfunktionen werden nämlich durch das Absinken der Schleppantenne erheblich beeinträchtigt, wobei die vorgesehene Orientierung von horizontal auflösenden Richtfunktionen der Schleppantenne vollständig verloren geht.

Eine Kreuzpeilung mittels einer abgesunkenen Schleppantenne ist daher bei üblichen Sonaranlagen nicht möglich. Schleppantennen werden daher regelmäßig bei einem stehenden Wasserfahrzeug eingeholt. Sie sind in diesem Zustand im Allgemeinen nicht verwendbar und es besteht vielmehr die Gefahr, dass die Schleppantenne beschädigt wird, bspw. den Meeresgrund berührt oder aber mit umhertreibenden Objekten kollidiert.

Gleichwohl wird gemäß DE 198 25 886 C2 vorgeschlagen, zum Bestimmen der Tauchtiefe eines Ziels eine Schleppantenne in eine Schräglage von bis zu 90° gegenüber der Horizontalen zu verschwenken, um bei bereits bekannter Entfernung zum Ziel die Tauchtiefe des Ziels anhand des Tiefenwinkels zu bestimmen. Wie im Einzelnen die Zielentfernung bestimmt wird, ist jedoch nicht näher ausgeführt. Die geneigte Schleppantenne wird jedenfalls nur zur Tauchtiefenbestimmung herangezogen. Bei einer Neigung der Schleppantenne von 90° ergibt sich ein in Elevation auflösendes Sonarsystem, so dass diese Schrift als gattungsbildend für die vorliegende Erfindung angesehen wird. Nachteilig an dieser Schrift ist jedoch, dass konkrete Angaben zur Zielentfernungsbestimmung fehlen.

Ferner wird gemäß US 5 034 930 vorgeschlagen, eine Linearantenne vertikal auszurichten und aus dem vertikalen Schalleinfallswinkel auf die Antenne und der Wassertiefe bei der Antenne eine Approximation der Zielentfernung zu berechnen. Diese Berechnung erfolgt im Falle einer einfachen Reflexion eines Schallstrahls am Meeresgrund, indem die doppelte Wassertiefe durch den Tangens des Einfallswinkels des Schallstrahls zur Horizontalen geteilt wird. Dieser Ansatz gilt jedoch nur für große Wassertiefen, d.h. für Wassertiefen die wesentlich größer sind als die Tauchtiefen des Ziels sowie der Empfangsantenne. Der vertikale Schalleinfallswinkel ist jedoch nicht der vertikale Winkel zum Ziel (Elevationswinkel), sondern ein aufgrund von Reflexionen signifikant vom Elevationswinkel abweichender Winkel, wobei die Abweichung von der Anzahl der Reflexionen eines Schallstrahls am Meeresgrund und der Wassertiefe bestimmt wird.

Ferner befasst sich US 4 312 053 mit der Berechnung der Entfernung und Tiefe eines getauchten Objekts, wobei jedoch die Einfallswinkel von Schallstrahlen bei Mehrwegeausbreitung verwendet werden.

Schließlich ist auch aus US 5 357 484 eine vertikal ausgerichtete Linearantenne bekannt, die jedoch vom Meeresgrund zur Wasseroberfläche reicht und daher aufgrund ihrer Länge nur an festen Standorten mit unveränderbarer Wassertiefe geeignet ist.

Der Erfindung liegt nach alledem das Problem zugrunde, die Zielentfernungs- und -positionsbestimmung durch ein weiteres System zur Zielentfernungsschätzung, insbesondere bei stehenden Wasserfahrzeugen, zu verbessern.

Die Erfindung löst dieses Problem durch die Merkmale eines Verfahrens gemäß Anspruch 1 sowie durch eine Sonaranlage mit den Merkmalen des Anspruchs 8.

Die Erfindung hat erkannt, dass eine vertikal ausgerichtete erste Empfangsantenne mit einer Vielzahl von entlang einer Linie angeordneten elektroakustischen Wandlern auch geeignet ist, einen Entfernungsschätzwert vom Wasserfahrzeug zu einem Ziel zu ermitteln. Hierzu wird eine üblicherweise, d.h. im normalen Fahrbetrieb des Wasserfahrzeugs, horizontal ausgerichtete Empfangsantenne vertikal ausgerichtet. Der akustische Schwerpunkt dieser Empfangsantenne befindet sich dann bspw. mehrere hundert Meter unterhalb des Wasserfahrzeuges. Nunmehr wird mittels dieser Empfangsantenne ein in einer Vertikalebene liegender Elevationswinkel zwischen einer durch den akustischen Schwerpunkt verlaufenden Horizontalebene und einem Ziel bestimmt. Damit ergibt sich ein in Elevation auflösendes erstes Sonarteilsystem. In Abhängigkeit des somit erhaltenen Elevationswinkels und einer vertikalen Lage, insbesondere der Tauchtiefe, des Ziels sowie unter Berücksichtigung der Tiefe des akustischen Schwerpunkts der Empfangsantenne wird dann ein Entfernungsschätzwert zum Ziel gebildet.

Bei einem derartigen Sonarteilsystem kann eine üblicherweise nur zur horizontalen Peilung verwendete langgestreckte Empfangsantenne verwendet werden, die jedoch erfindungsgemäß im Wesentlichen vertikal statt horizontal ausgerichtet ist. Die Erfindung schafft somit auf vorteilhafte Weise mit einfachen Mitteln ein weiteres Sonarteilsystem für eine Sonaranlage, mit dem ohne wesentlichen zusätzlichen Aufwand an Geräten eine Entfernungsschätzung bereitgestellt werden kann.

Ferner ist erfindungsgemäß eine zweite Empfangsantenne eines zweiten Sonarteilsystems vorgesehen, die ebenfalls eine Vielzahl von elektroakustischen Wandlern zum Empfangen von Schallwellen und Erzeugen von elektrischen Empfangssignalen aufweist. Während das erste Sonarteilsystem ein in Elevation auflösendes Sonarteilsystem ist, ist das zweite Sonarteilsystem ein in Azimut auflösendes Sonarteilsystem, mit dem ein in einer Horizontalebene liegender horizontaler Peilwinkel zwischen einer in der Horizontalebene liegenden Bezugsrichtung, insbesondere der Nordrichtung, und einem Ziel bestimmbar ist.

Aus dem auf diese Weise bestimmten Entfernungsschätzwert und dem horizontalen Peilwinkel lässt sich, zumindest wenn sich nur ein schallabstrahlendes Ziel im Empfangsbereich der Antennen befindet oder eine anderweitige zuverlässige Zuordnung eines Entfernungsschätzwertes zu einem horizontalen Peilwinkel erfolgen kann, die Position des Ziels bestimmen. Diese Positionsbestimmung ermittelt vorteilhafterweise die geografische Position des Ziels, bspw. in Form von Längen- und Breitengraden, und/oder eine Relativposition, d.h. eine Position des Ziels relativ zu einer der Empfangsantennen oder zu einem der Sonarteilsysteme. Eine bevorzugte Sonaranlage weist daher Mittel zum Bestimmen dieser Zielposition aus dem Entfernungsschätzwert und dem horizontalen Peilwinkel auf.

Vorzugsweise handelt es sich bei der langgestreckten, ersten Empfangsantenne um eine Linearantenne, insbesondere eine hinter einem Wasserfahrzeug nachschleppbare Schleppantenne. Derartige Schleppantennen haben den Vorteil, dass sie über eine große Länge sowie über ein langes Schleppseil verfügen. Somit kann eine große vertikale Entfernung zwischen dem akustischen Zentrum (akustischen Schwerpunkt) der ersten Empfangsantenne und dem Wasserfahrzeug geschaffen werden.

Eine derartige Schleppantenne bildet rotationssymmetrische Richtcharakteristiken aus. Diese Richtcharakteristiken sind, was ihre jeweiligen Hauptempfangsrichtungen angeht, kegelmantelartig ausgebildet. Dabei öffnet sich bei einer vertikal ausgerichteten Empfangsantenne der jeweilige Kegel vertikal nach oben oder unten.

Vorteilhafterweise handelt es sich bei der zweiten Empfangsantenne um eine fest am Wasserfahrzeug eingebaute Antenne, insbesondere eine Seitenantenne, eine Zylinderbasis oder eine Hufeisenbasis. Diese Antennensysteme stehen regelmäßig ohnehin an entsprechenden Wasserfahrzeugen zur Verfügung. Sie sind besonders gut geeignet, um horizontal auflösende Sonarteilsysteme bereitzustellen.

Um die Entfernung genau angeben zu können, wird bei einer Ausführungsform angenommen, dass das Ziel ein Überwasserfahrzeug ist, dessen vertikale Lage somit bekannt ist, nämlich der Wasseroberfläche entspricht. Der Entfernungsschätzwert ergibt sich dann aus einem Schnitt der Wasseroberflächenebene mit einer sich aus dem Elevationswinkel der entsprechenden Richtcharakteristik ergebenden Kegelmantelfläche.

Sofern es sich jedoch bei dem Ziel nicht um ein Überwasserfahrzeug handelt, sondern dieses möglicherweise auch ein Unterwasserfahrzeug sein kann, wird neben dem Elevationswinkel noch die Tiefe dieses Ziels benötigt, um einen Entfernungsschätzwert ermitteln zu können. Diese Tiefe wird bspw. wie in DE 40 41 590 A1 beschrieben durch Messungen von Empfangswinkeln bei unterschiedlicher Ausrichtung der Längsachse der Empfangsantenne oder mittels eines weiteren Sonarteilsystems bestimmt. Der Entfernungsschätzwert ergibt sich dann aus einem Schnitt einer der Tiefe des Ziels entsprechenden Horizontalebene mit einer sich aus dem Elevationswinkel ergebenden Kegelmantelfläche.

Die einem Ziel zugeordnete Empfangssignale der ersten Empfangsantenne werden bei einer bevorzugten Ausführungsform nach einer Vorverarbeitung einer ersten Spektralanalyse zum Erzeugen eines ersten, dem ersten Sonarteilsystem zugeordneten Spektrums unterzogen. Das erste Sonarteilsystem weist zu diesem Zweck eine Signalverarbeitungseinrichtung und einen Spektralanalysator auf.

Entsprechendes gilt für das zweite Sonarteilsystem. D.h. die einem Ziel zugeordneten Empfangssignale der zweiten Empfangsantenne werden nach einer Vorverarbeitung einer zweiten Spektralanalyse zum Erzeugen eines zweiten, dem zweiten Sonarteilsystem zugeordneten Spektrums unterzogen. Das zweite Sonarteilsystem weist zu diesem Zweck ebenfalls eine Signalverarbeitungseinrichtung und einen entsprechenden Spektralanalysator auf.

Die auf diese Weise erhaltenen Spektren des ersten Sonarteilsystems und des zweiten Sonarteilsystems werden dann mit einem Vergleicher verglichen und etwaige Übereinstimmungen der Spektren in Spektralmerkmalen ermittelt. Bei festgestellter Übereinstimmung von Spektralmerkmalen wird ein mittels des ersten Sonarteilsystems erhaltener Entfernungsschätzwert einem mittels des zweiten Sonarteilsystems erhaltenen horizontalen Peilwinkel zugeordnet.

Auf diese Weise können horizontale Zielpeilwinkel Entfernungsschätzwerten zugeordnet werden. Bspw. kann anhand der Spektralanalysen erkannt werden, dass die über die beiden verschiedenen Empfangsantennen erhaltenen Signale von derselben Schiffsschraube erzeugt werden. Dies würde sich bspw. durch gleichartige Spektrallinien bei entsprechenden Frequenzen im Spektrum darstellen.

Diese besondere Ausführungsform hat den Vorteil, dass auch bei einem stehenden Wasserfahrzeug eine schnell durchzuführende Entfernungsschätzung durchgeführt werden kann.

Bei einer besonderen Ausführungsform werden die erhaltenen Entfernungsschätzwerte und horizontalen Peilwinkel auf einer Anzeigevorrichtung, insbesondere einem Bildschirm, ausgegeben, wobei a) bei einer festgestellten Übereinstimmung von Spektralmerkmalen eine Marke mit horizontalem Peilwinkel und Entfernungsschätzwert, b) bei fehlender Übereinstimmung von Spektralmerkmalen eine Markierung mit horizontalem Peilwinkel, jedoch ohne Entfernungsschätzwert und/oder c) bei teilweiser Übereinstimmung von Spektralmerkmalen eine Markierung mit horizontalem Peilwinkel und mehrere Entfernungsmarken auf der Anzeigevorrichtung ausgegeben werden. Durch die Ausgabe mehrerer Entfernungsmarken wird die Mehrdeutigkeit einer Entfernungsschätzung angezeigt. Vorzugsweise werden dabei der Entfernungsschätzwert und der horizontale Peilwinkel in einer einer Ansicht von oben entsprechenden zweidimensionalen Lagedarstellung ausgegeben, wobei bei nur teilweiser Übereinstimmung von Spektralmerkmalen eine speichenartige Linie mit mehreren Entfernungsmarken dargestellt wird.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:

Fig. 1     eine schematische Seitenansicht einer vertikal ausgerichteten Emp- fangsantenne an einem Unterwasserfahrzeug zur Entfernungsschätzung gemäß einem Ausführungsbeispiel der Erfindung;

Fig. 2     ein Blockschaltbild zur Erläuterung eines Verfahrens zur passiven Bestimmung von Zielentfernungen, Peilwinkeln und Positionsanga- ben gemäß einem Ausführungsbeispiel der Erfindung und

Fig. 3     eine Sonaranlage zur Durchführung eines derartigen Verfahrens.

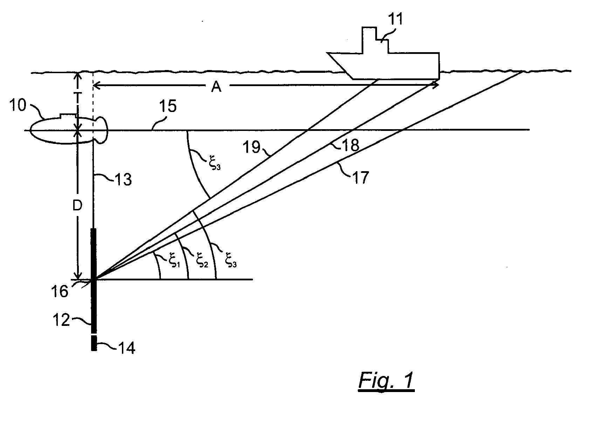

Fig. 1 zeigt in einem Vertikalschnitt eine typische Situation auf See, bei dem ein Unterwasserfahrzeug 10 ein Überwasserfahrzeug 11 zu orten versucht. Eine derartige Ortung erfolgt vorteilhafterweise auf passivem Wege. D.h., das Unterwasserfahrzeug 10 sendet keinerlei Schallwellen aus, um das Überwasserfahrzeug 11 zu orten. Vielmehr werden von dem Überwasserfahrzeug 11 ausgehende Schallwellen von einer Sonaranlage des Unterwasserfahrzeuges 10 aufgefangen und nach einer Signalverarbeitung ausgewertet. Diese Sonaranlage ist in der Lage, schallabstrahlende, d.h.

schallerzeugende oder schallreflektierende, Ziele zu peilen. Der horizontale Peilwinkel gibt dabei den in einer Horizontalebene liegenden Winkel des Überwasserfahrzeuges 11 gegenüber einer Bezugsrichtung, insbesondere gegenüber Nord, an. Dieser Winkel wird auch als Azimutwinkel bezeichnet.

Als Unterwasserfahrzeuge kommen insbesondere U-Boote zur Anwendung. Die Erfindung ist jedoch nicht auf U-Boote beschränkt. Sie kann auch in unbemannten Unterwasserfahrzeugen eingesetzt werden. Darüber hinaus ist die Erfindung auch nicht auf Sonaranlagen in Unterwasserfahrzeugen beschränkt, sondern kann auch in Sonaranlagen von Überwasserfahrzeugen eingesetzt werden.

Ferner ist die Erfindung nicht auf die Zieldaten- bzw. Zielentfernungsbestimmung von zu ortenden Überwasserzielen beschränkt, sondern kann auch für die Bestimmung von Zieldaten bzw. der Zielentfernung von Unterwasserfahrzeugen verwendet werden.

Das Unterwasserfahrzeug 10 weist eine Schleppantenne 12 auf, welche an einem flexiblen längserstreckten Element 13, insbesondere einem Seil, einem Kabel oder einer Kette mit dem Unterwasserfahrzeug 10 verbunden ist. Dieses Element 13 dient nicht nur der mechanischen Verbindung zwischen der Schleppantenne 12 und dem Unterwasserfahrzeug. Es dient auch zur Datenübertragung von Empfangssignalen von sich in der Schleppantenne 12 befindenden elektroakustischen Wandlern.

Die Schleppantenne weist ein schweres Ende, sog. Schwanzstück 14 auf, welches bei stehendem Unterwasserfahrzeug die Schleppantenne in eine vertikale Lage ausrichtet.

Die Schleppantenne 12 umfasst eine Vielzahl von elektroakustischen Wandlern, die vorzugsweise äquidistant, d.h. mit gleichen Abständen voneinander in einer Reihe angeordnet sind. Vorzugsweise sind dabei alle Wandler entlang einer Geraden ausgerichtet. Die Wandler sind komplett von einem schalltransparenten Hüllkörper überdeckt. Die Schleppantenne 12 empfängt mittels der Wandler einfallenden Schall, der von Ziele bildenden Schallquellen, bspw. dem Überwasserfahrzeug 11, abgestrahlt wird und sich im Wasser ausbreitet.

Im normalen Betrieb wird die Schleppantenne 12 hinter dem Unterwasserfahrzeug hergezogen und zwar derart, dass die Schleppanterine 12 im Wesentlichen horizontal ausgerichtet ist und sich im Wesentlichen auf derselben Horizontalebene 15 befindet, wie das Wasserfahrzeug.

Die Schleppantenne 12 hat einen akustischen Schwerpunkt 16, der im Wesentlichen dem geometrischen Mittelpunkt der gesamten Wandleranordnung längs der Schleppantenne 12 entspricht. Dieser akustische Schwerpunkt befindet sich in einem Abstand D zur Horizontalebene 15 des Unterwasserfahrzeuges 10. Der Abstand D beträgt mehrere hundert Meter. Bspw. liegt er in einem Bereich von 300 bis 500 m.

Der Abstand D ist jedoch variierbar, Insbesondere kann der Abstand D der Schleppantenne 12 zum Unterwasserfahrzeug 10 durch Ausfahren oder Einholen des flexiblen Elements 13 verändert werden. Hierzu weist das Unterwasserfahrzeug 10 eine entsprechende Winde auf, mittels der die Schleppantenne 12 ausgefahren bzw. eingeholt werden kann. Ferner weist das Unterwasserfahrzeug 10 Mittel zum Bestimmen des Abstandes D auf. Diese Mittel erfassen bspw. die Länge des ausgefahrenen flexiblen Elements oder bspw. die Anzahl der Umdrehungen der Winde. Der so bestimmte Abstand D wird in der sich anschließenden Peilung bzw. Zieldatengenerierung verarbeitet.

Mittels der Schleppantenne 12 können aufgrund nachfolgend genauer erläuterter elektronischer Maßnahmen in einer Signalverarbeitungseinrichtung unterschiedliche vertikale Peilwinkel bzw. Elevationswinkel angepeilt werden. Dabei ergeben sich akustische Peilstrahlen 17, 18, 19. Zum Peilstrahl 17 gehört eine Richtcharakteristik der Antenne 12 mit einem als Elevationswinkel $\xi_1$ bezeichneten vertikalen Peilwinkel. Zum Teilstrahl 18 gehört in entsprechender Weise ein vertikaler Peilwinkel bzw. Elevationswinkel $\xi_2$. In entsprechender Weise gehört zu dem Teilstrahl 19 ein vertikaler Peilwinkel bzw. Elevationswinkel $\xi_3$.

Das Überwasserfahrzeug 11 befindet sich im Bereich der Peilstrahlen 18 und 19, wobei der Peilstrahl 17 an dem Überwasserschiff 11 vorbeizielt. Die Signalverarbeitungseinrichtung der im Unterwasserfahrzeug 10 vorgesehenen Sonaranlage empfängt daher deutliche Signale innerhalb der zu den Peilstrahlen 18 und 19 gehörenden Richtcharakteristiken. Demgegenüber ist mittels der zu dem Peilstrahl 17 gehörenden Richtcharakteristik nur ein sehr geringer Signalpegel oder gar kein Signal empfangbar.

Das stärkste Signal wird bei einem fahrenden Wasserfahrzeug von der Schiffsschraube erzeugt. Daher wird das stärkste Signal über die zum Peilstrahl 18 gehörende Richtcharakteristik eingefangen.

Das Unterwasserfahrzeug 10 ermittelt ständig über einen Tiefenmesser seine Tauchtiefe T und damit die Tiefe der Horizontalebene 15. Ferner ermittelt das Unterwasserfahrzeug den Abstand D des akustischen Schwerpunkts 16 der Schleppantenne 12. Daher ist insgesamt auch die Tiefe des akustischen Schwerpunkts 16 bzw. der vertikale Abstand zur Wasseroberfläche bekannt, nämlich als Summe T+D. Da ferner der zum Peilstrahl 18 gehörende Elevationswinkel $\xi_2$ der Sonaranlage bekannt ist, kann durch trigonometrische Berechnung die horizontale Entfernung A zwischen dem Unterwasserfahrzeug 10 und dem Überwasserfahrzeug 11 gemäß folgender Gleichung berechnet werden:

$$A = (D + T)/\tan \xi_2$$

Das Unterwasserfahrzeug weist neben der Schleppantenne, mit der ein erstes Sonarteilsystem gebildet wird, eine zweite Empfangsantenne eines zweiten Sonarteilsystems auf. Bspw. kann es sich hierbei um eine sog. Seitenantenne bzw. flank array handeln oder um eine sog. Zylinderbasis oder Hufeisenbasis. Dieses zweite Antennensystem weist eine gute Auflösung in Azimut auf. Die diesen Antennen zugeordneten Wandler sind zu diesem Zweck vollständig oder teilweise horizontal bzw. parallel zur Längsachse des Unterwasserfahrzeuges 10 angeordnet.

Das mit der ersten Empfangsantenne, nämlich der Schleppantenne 12, gebildete erste Sonarteilsystem weist demgegenüber ein in Elevation hoch auflösendes Sonarteilsystem auf.

Sofern es sich bei dem in Fig. 1 als Überwasserfahrzeug 11 dargestellten Ziel um ein Unterwasserfahrzeug handelt, wird zur Abschätzung der Zielentfernung A die Tauchtiefe dieses weiteren Unterwasserfahrzeuges benötigt. Diese kann bspw. mittels einer weiteren Antenne bzw. eines weiteren Sonarteilsystems ermittelt werden. Der Entfernungsschätzwert wird dann von der Sonaranlage aus einem Schnitt einer der Tauchtiefe des Ziels entsprechenden Horizontalebene mit einer sich aus dem Elevationswinkel ergebenden Kegelmantelfläche berechnet.

Die mittels der Sonarteilsysteme erhaltenen Daten werden in der Sonaranlage zusammengeführt und weiter verarbeitet.

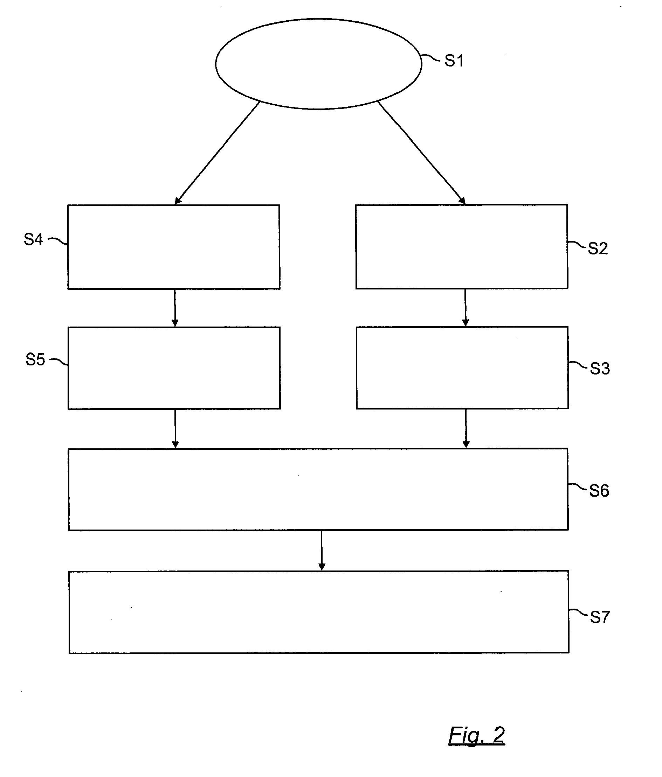

Fig. 2 veranschaulicht ein mit dieser Sonaranlage durchgeführtes Verfahren zum passiven Bestimmen von Zieldaten, nämlich von einem horizontalen Peilwinkel bzw. Azimutwinkel zum Ziel (bspw. Überwasserfahrzeug 11) und einem aus einem vertikalen Peilwinkel bzw. Elevationswinkel ξ abgeleiteten Entfernungsschätzwert A.

Von Zielen ausgehende Schallwellen werden im Schritt S1 von den Empfangsantennen des Unterwasserfahrzeuges 10 empfangen.

Im Schritt S2 empfängt ein erstes Sonarteilsystem mit einer vertikal ausgerichteten Empfangsantenne, insbesondere der Schleppantenne 12, die von einem Ziel ausgehenden Schallwellen und verarbeitet diese. Dieses erste Sonarteilsystem weist eine hohe Auflösung in Elevation auf. D.h. das Sonarteilsystem kann feststellen, in welchem vertikalen Winkel sich ein Ziel zu dieser Empfangsantenne befindet.

Im Schritt S3 wird der zu einem Ziel gehörende Elevationswinkel zur Zielverfolgung aufgezeichnet. Ferner wird aus dem jeweiligen Elevationswinkel ein Entfernungsschätzwert A gebildet und das zu einem Ziel gehörende akustische Signal zur Zielspektrumsgenerierung einer Spektralanalyse unterzogen.

Parallel zu den Schritten S2 und S3 werden von einem zweiten Sonarteilsystem mit einer hohen Auflösung in Azimut Schallwellen von Zielen empfangen und verarbeitet. Dieses zweite Sonarteilsystem ist in der Lage einen horizontalen Winkel zu einer Bezugsrichtung zu einem Ziel und zwar mit hoher Auflösung anzugeben.

Dieses zweite Sonarteilsystem weist bspw. eine Seitenantenne (flank array), eine Zylinderbasis und/oder eine Hufeisenbasis auf. Diese Antennen sind fest mit dem Unterwasserfahrzeug 10 verbunden.

Im Schritt S5 wird der zu einem Ziel gehörende horizontale Peilwinkel bzw. Azimutwinkel zur Zielverfolgung aufgezeichnet. Ferner wird das zu einem Ziel gehörende akustische Signal einer Spektralanalyse unterzogen. Die Schritte S2 und S4 sowie S3 und S5 werden jeweils im Wesentlichen zeitgleich durchgeführt. Auf diese Weise können die in den Schritten S3 und S5 erhaltenen Zielspektren im Schritt S6 im Hinblick auf eine etwaige Übereinstimmung von vorbestimmten Spektralmerkmalen verglichen werden.

Sofern eine Übereinstimmung der Spektralmerkmale vorliegt, wird ein im Schritt S5 und damit mit dem in Azimut auflösenden Sonarteilsystem ermittelter horizontaler Peilwinkel bzw. Azimutwinkel einem im Schritt S3 mittels des in Elevation auflösenden Sonarteilsystems ermittelter Entfernungsschätzwert zugeordnet. D.h. die von unterschiedlichen Antennensystemen erhaltenen Signale im Zeitbereich werden jeweils einer Spektralanalyse unterzogen und dann im Frequenzbereich miteinander verglichen. Auf diese Weise können Zieldaten des ersten Sonarteilsystems Zieldaten des zweiten Sonarteilsystems zugeordnet werden. Die Zuordnung erfolgt dabei in Abhängigkeit einer etwaigen Übereinstimmung von Spektralmerkmalen der entsprechenden Spektren.

Sofern eine Übereinstimmung von Spektralmerkmalen vorliegt, wird auf einer entsprechenden Anzeigevorrichtung, bspw. einem Bildschirm, eine Marke eines Ziels mit horizontalem Peilwinkel und Entfernungsschätzwert ausgegeben. Diese Marke kann über einen definierten Zeitabschnitt auch als Spur dargestellt werden. Diese Marke repräsentiert die Position des Ziels zur Peilanlage des Unterwasserfahrzeugs 10, insbesondere als geografische Position oder als Relativposition, d.h. als Position relativ zum Unterwasserfahrzeugs 10.

Sofern keine Übereinstimmung zwischen zwei Spektren besteht, wird lediglich der horizontale Peilwinkel ausgegeben, was im Falle einer zweidimensionalen Darstellung, die einer Lagedarstellung in einer Ansicht von oben entspricht, jeweils als Speiche erfolgt. Entfernungsschätzwerte werden gemäß einem besonderen Ausführungsbeispiel jeweils als Kreis mit einem dem Entfernungsschätzwert entsprechenden Radius angezeigt.

Sofern lediglich eine teilweise Übereinstimmung der Spektren vorliegt, was bspw. dann der Fall sein kann, wenn sich mehrere Ziele vom Unterwasserfahrzeug 10 aus betrachtet hintereinander in einer Reihe befinden, wird ein horizontaler Peilwinkel mit mehreren Entfernungsmarken, bspw. eine Speiche mit mehreren Entfernungsmarken dargestellt, um die Mehrdeutigkeit anzuzeigen.

Diese Darstellung auf der Anzeigevorrichtung erfolgt im Schritt S7.

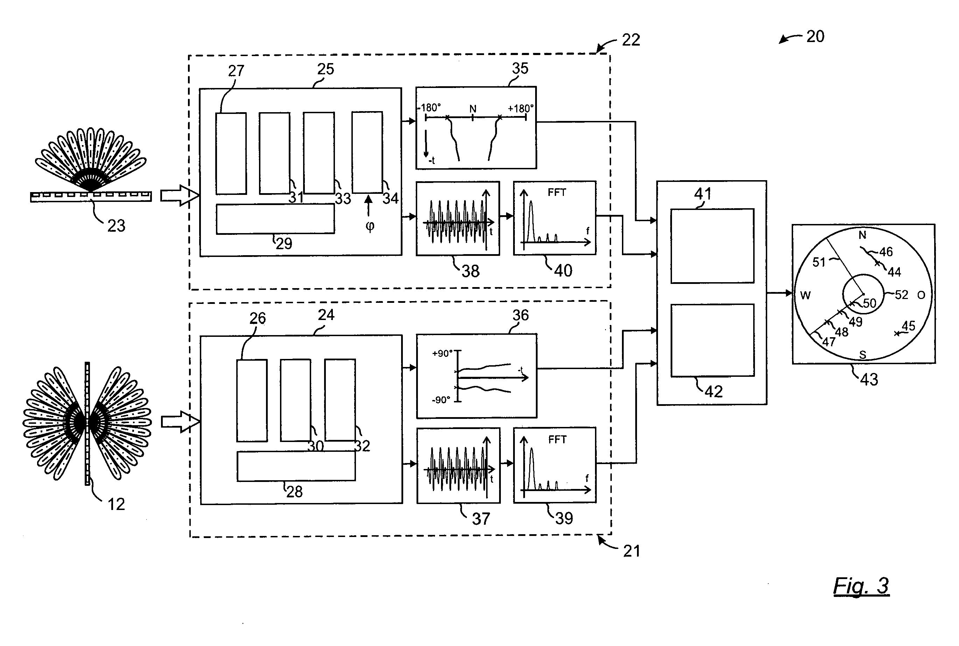

Fig. 3 zeigt eine Sonaranlage 20 mit einem ersten Sonarteilsystem 21 und einem zweiten Sonarteilsystem 22. Das erste Sonarteilsystem 21 umfasst die vor-stehend genannte vertikal ausgerichtete Empfangsan-tenne 12.

Das zweite Sonarteilsystem 22 umfasst eine zweite Empfangsantenne 23, welche eine in Azimut auflösende Empfangsantenne ist, bspw. eine Seitenantenne eines U-Bootes. Auch diese Seitenantenne weist eine Vielzahl von elektroakustischen Wandlern auf, die vorzugsweise äquidistant, d.h. mit gleichbleibenden Abständen voneinander in einer Reihe angeordnet sind. Vorzugsweise sind alle Wandler entlang einer Geraden zumindest aber entlang einer äußeren Bootsrumpfkontur angeordnet. Diese Wandler sind ebenfalls komplett von einem schalltransparentem Hüllkörper überdeckt. Die zweite Empfangsantenne 23 empfängt mittels der Wandler einfallenden Schall, der von Ziele bildenden Schallquellen abgestrahlt wird und sich im Wasser ausbreitet.

Die Wandler der ersten Antenne 12 sowie die Wandler der zweiten Antenne 23 sind jeweils mit einer Signalverarbeitungseinrichtung 24 bzw. 25 verbunden, welche anhand der elektrischen Ausgangssignale der Wandler, nachfolgend als Empfangssignale bezeichnet, die Einfallsrichtung vom Schall und damit eine vertikale bzw. horizontale Peilung von Zielen bestimmen. Jedem dieser vertikalen bzw. horizontalen Peilwinkel wird ein Ziel zugeordnet, die im vorliegenden Zusammenhang als zielzugehörige vertikale und horizontale Peilwinkel bzw. als Elevationswinkel und Azimutwinkel bezeichnet werden.

Jede der Signalverarbeitungseinrichtungen 24, 25 der Sonaranlage 20 umfasst einen Richtungsbildner 26 bzw. 27 zum Anwenden von in einem Datenspeicher 28 bzw. 29 gespeicherten Zeitverzögerungskoeffizienten auf die Empfangssignale der Wandler der ersten bzw. zweiten Empfangsantenne 12 bzw. 23. Die Empfangssignale der Wandler werden durch Anwendung der jewei-ligen Zeitverzögerungskoeffizienten derart zeitverzö-gert, dass sie in einer im Falle des ersten Sonarteilsystems 21 zur Einfallsrichtung des Schalls rechtwinkligen Bezugsebene bzw. im Falle des zweiten Sonarteilsystems 22 in einer zur horizontalen Einfallsrichtung des Schalls rechtwinkligen Bezugsebene konphas sind.

Die Signalverarbeitungseinrichtungen 24 bzw. 25 weisen ferner jeweils eine Gruppensignalverarbeitungseinheit 30 bzw. 31 auf, welche in Abhängigkeit von den jeweiligen Zeitverzögerungskoeffizienten auf die jeweilige Empfangsantenne 12 bzw. 23 bezogenen horizontalen bzw. vertikalen Peilwinkeln - vorliegend auch als antennenbezogene Peilwinkel bezeichnet - zugeordnet sind. Diese Gruppensignalverarbeitungseinheiten 30 bzw. 31 ermitteln ferner Intensitätswerte, insbesondere Amplitudenwerte oder Leistungswerte, ggf. auch auf Referenzwerte bezogen in Form von Pegeln, der Gruppensignale in Zuordnung zu den antennenbezogenen vertikalen bzw. horizontalen Peilwinkeln. Ferner erstellen die Gruppensignalverarbeitungseinheiten 30 bzw. 31 einen aus den ermittelten Intensitätswerten, insbesondere Pegeln, resultierenden Intensitätsverlauf bzw. Pegelverlauf über die antennenbezogenen vertikalen bzw. horizontalen Peilwinkel.

Ferner weisen die Signalverarbeitungseinrichtungen 24 bzw. 25 jeweils einen Maximumdetektor 32 bzw. 33 auf, mit dem jeweils lokale Maxima im jeweiligen Intensitätsverlauf, insbesondere von lokalen Pegelmaxima im jeweiligen Pegelverlauf, ermittelt werden und diesen Maxima jeweils zielzugehörige vertikale Peilwinkel, d.h. Elevationswinkel, bzw. horizontale Peilwinkel, d.h. Azimutwinkel, zugeordnet werden.

Die zweite Signalverarbeitungseinrichtung 25 weist ferner eine Transformationseinheit 34 auf zum Transformieren von zielzugehörigen horizontalen Peilwinkel (Azimutwinkel) auf auf Nord bezogene zielzugehörige Peilwinkel, die vorliegend als nordbezogene zielzugehörige horizontale Peilwinkel bezeichnet werden. Diese Transformation auf Nord erfolgt in Abhängigkeit des sog. Headings $\varphi$ der Empfangsantenne 23 bzw. des Unterwasserfahrzeuges 10, d.h. der Ausrichtung der Empfangsantenne 23 bzw. des Unterwasserfahrzeuges 10 nach einer Himmelsrichtung, z.B. Norden. Die Signalverarbeitungseinrichtung 25 steht zu diesem Zweck mit einem Himmelsrichtungssensor, bspw. einem Kompass, in Verbindung, von welchem das Heading $\varphi$ der Signal-verarbeitungseinrichtung 25 zugeführt wird.

Vorzugsweise weist die Sonaranlage 20 bzw. das zweite Sonarteilsystem 22 eine mit der Signalverarbeitungseinrichtung 25 in Verbindung stehende Ausgabeeinheit 35 auf, bspw. einen Monitor oder einen Drucker bzw. Plotter, auf der zielzugehörige horizontale oder nordbezogene zielzugehörige horizontale Peilwinkel bzw. Azimutwinkel ausgegeben werden. Der Bediener der Sonaranlage 20 erhält mittels dieser Ausgabeeinheit 35 eine Darstellung der Lage sich in seinem Umfeld befindender schallabstrahlender Ziele.

Die Signalverarbeitungseinrichtung 24 steht vorzugsweise ebenfalls mit einer Ausgabeeinheit 36 in Verbindung, welche bspw. wiederum als Monitor oder Drucker oder Plotter ausgebildet ist. Auf diese Ausgabeeinheit 36 werden zielzugehörige vertikale Peilwinkel bzw. Elevationswinkel $\xi$ ausgegeben.

Die zu jeweils einem Ziel zugehörigen Gruppensignale werden in jeweiligen Einheiten 37 bzw. 38 des ersten Sonarteilsystems 21 bzw. zweiten Sonarteilsystems 22 zu Zeitsignalen zusammengeführt. Somit kann der zeitliche Verlauf von zu jeweils einem Ziel gehörenden Gruppensignalen weiter ausgewertet werden. Die jeweiligen zeitlichen Verläufe derartiger Signale der Einheiten 37 bzw. 38 werden dann jeweils in einem Spektralanalysator 39 bzw. 40 einer Spektralanalyse, bspw. einer Fourieranalyse, vorzugsweise in Form einer FFT (fast fourier transform) unterzogen. Das erste Sonarteilsystem liefert somit ein Spektrum zu einem zielzugehörigen Signal mit einem entsprechenden vertikalen Peilwinkel bzw. Elevationswinkel und/oder einen Entfernungsschätzwert. In analoger Weise liefert das zweite Sonarteilsystem 22 ein Spektrum zu einem horizontalen Peilwinkel bzw. Azimutwinkel.

Die Spektren sowie Entfernungsschätzwerte und Azimutwinkel werden einer Vergleicherlogik 41 und einer Verknüpfungslogik 42 zugeführt. Die Vergleicherlogik 41 vergleicht die Spektren und ermittelt etwaige Übereinstimmungen in vorbestimmten Spektralmerkmalen. Die Verknüpferlogik 42 ordnet im Falle einer festgestellten Übereinstimmung einen Entfernungsschätzwert einem Azimutwinkel zu.

Auf diese Weise verknüpfte Entfernungsschätzwerte werden dann auf einem Anzeigegerät 43, bspw. wiederum ein Monitor, dargestellt, das in einer zweidimensionalen Darstellung der Lage in einer Ansicht von oben die ermittelten Zieldaten, insbesondere die Zielentfernung und die Position des Ziels, als Marke 44, 45 mit Peilwinkelangabe und Entfernungsangabe und/oder als Spur 46 anzeigt. Sofern eine Zuordnung zweier Spektren nicht eindeutig, sondern mehrdeutig ist, erfolgt die Darstellung in Form einer Speiche 47 mit mehreren Marken 48, 49, 50. Sofern einem zielzugehörenden horizontalen Peilwinkel bzw. Azimutwinkel kein Elevationswinkel bzw. kein Entfernungsschätzwert zugeordnet werden kann, erfolgt auf dem Anzeigegerät 43 eine Darstellung eines Ziels lediglich als eine Speiche 51.

Sofern einem zielzugehörenden Entfernungsschätzwert kein horizontaler Peilwinkel bzw. Azimutwinkel zugeordnet werden kann, erfolgt bei einem besonderen Ausführungsbeispiel auf dem Anzeigegerät 43 eine Darstellung eines Ziels als Kreis 52.

Mit dem beschriebenen Peilverfahren bzw. der beschriebenen Sonaranlage 20 werden horizontal und vertikal auflösende Sonarteilsystems derart über Empfangsspektren miteinander verknüpft, dass in kurzer Zeit eine Sonarlage aufgebaut werden kann, ohne dass hierzu das entsprechende Wasserfahrzeug Eigenmanöver ausführen müsste. Dies ist vorteilhaft, um sich einer gegnerischen Ortung zu entziehen.

**Patentansprüche**

1. Verfahren zum passiven Bestimmen von wenigstens der Entfernung zu und der Position von einem schallabstrahlenden Ziel (11) unter Verwendung einer einem ersten Sonarteilsystem (21) zugeordneten ersten Empfangsantenne (12) mit einer Vielzahl von entlang einer Linie angeordneten elektroakustischen Wandlern zum Empfangen von Schallwellen und Erzeugen von elektrischen Empfangssignalen, bei dem die erste Empfangsantenne (12) vertikal ausgerichtet und ein in einer Vertikalebene liegender Elevationswinkel ($\xi_2$) zwischen einer Horizontalebene und dem Ziel (11) bestimmt wird, so dass ein in Elevation auflösendes Sonarteilsystem (21) bereitgestellt wird,
**dadurch gekennzeichnet, dass**

   - ferner eine zweite Empfangsantenne (23) eines zweiten Sonarteilsystems (22) verwendet wird, die ebenfalls eine Vielzahl von elektroakustischen Wandlern zum Empfangen von Schallwellen und Erzeugen von elektrischen Empfangssignalen aufweist,
   - das zweite Sonarteilsystem (22) ein in Azimut auflösendes Sonarteilsystem ist, mit dem ein in einer Horizontalebene (15) liegender horizontaler Peilwinkel zwischen einer in der Horizontalebene liegenden Bezugsrichtung und einem Ziel (11) bestimmt wird,
   - in Abhängigkeit vom Elevationswinkel ($\xi_2$) und einer vertikalen Lage des Ziels sowie unter Berücksichtigung der Tiefe (T+D) des akustischen Schwerpunkts (16) der ersten Empfangsantenne (12) ein Entfernungsschätzwert einer Entfernung (A) zu diesem Ziel (11) ermittelt wird und
   - aus dem Entfernungsschätzwert und dem horizontalen Peilwinkel die Position des Ziels bestimmt wird.

2. Verfahren nach Anspruch 1,
**dadurch gekennzeichnet, dass**
die erste Empfangsantenne (12) eine Linearantenne, nämlich eine hinter einem Wasserfahrzeug (10) nachschleppbare Schleppantenne, und
die zweite Empfangsantenne (23) eine fest an einem Wasserfahrzeug eingebaute Antenne, nämlich eine Seitenantenne, eine Zylinderbasis oder eine Hufeisenbasis, ist.

3. Verfahren nach Anspruch 1 oder 2,
**dadurch gekennzeichnet, dass**
das Ziel (11) als Überwasserfahrzeug angenommen wird und der Entfernungsschätzwert (A) aus einem Schnitt der Wasseroberflächenebene mit einer sich aus einer Rotation einer dem Elevationswinkel ($\xi_2$) entsprechenden, auf das Ziel (11) weisenden Geraden um eine senkrechte Rotationsachse ergebenden Kegelmantelfläche ermittelt wird.

4. Verfahren nach Anspruch 1 oder 2,
**dadurch gekennzeichnet, dass**
das Ziel als Unterwasserfahrzeug angenommen wird, wobei die Tiefe dieses Ziels bestimmt und der Entfernungsschätzwert aus einem Schnitt einer der Tiefe des Ziels entsprechenden Horizontalebene mit einer sich aus einer Rotation einer dem Elevationswinkel ($\xi_2$) entsprechenden, auf das Ziel (11) weisenden Geraden um eine senkrechte Rotationsachse ergebenden Kegelmantelfläche berechnet wird.

5. Verfahren nach einem der vorhergehenden Ansprüche,
**dadurch gekennzeichnet, dass**

   - die einem Ziel (11) zugeordneten Signale der ersten Empfangsantenne (12) nach einer Vorverarbeitung (24) einer ersten Spektralanalyse (39) zum Erzeugen eines ersten, dem ersten Sonarteilsystem (21) zugeordneten Spektrums unterzogen werden,

- die einem Ziel (11) zugeordneten Empfangssignale der zweiten Empfangsantenne (23) nach einer Vorverarbeitung (25) einer zweiten Spektralanalyse (40) zum Erzeugen eines zweiten, dem zweiten Sonarteilsystem (22) zugeordneten Spektrums unterzogen werden,

- das erste Spektrum mit dem zweiten Spektrum verglichen (S6; 41) und etwaige Übereinstimmungen von Spektralmerkmalen ermittelt werden und

- bei festgestellter Übereinstimmung von Spektralmerkmalen ein mittels des ersten Sonarteilsystems (21) erhaltener Entfernungsschätzwert einem mittels des zweiten Sonarteilsystems (22) erhaltenen horizontalen Peilwinkel zugeordnet wird.

6.  Verfahren nach Anspruch 5,
    **dadurch gekennzeichnet, dass**
    der Entfernungsschätzwert und der horizontale Peilwinkel auf einer Anzeigevorrichtung (43) ausgegeben werden, wobei

    a) bei einer festgestellten Übereinstimmung von Spektralmerkmalen eine Marke (44, 45) mit horizontalem Peilwinkel und Entfernungsschätzwert,
    b) bei fehlender Übereinstimmung von Spektralmerkmalen eine Markierung (51) mit horizontalem Peilwinkel, jedoch ohne Entfernungsschätzwert und/oder
    c) bei teilweiser Übereinstimmung von Spektralmerkmalen eine Markierung (47) mit horizontalem Peilwinkel und mehreren Entfernungsmarken (48, 49, 50)

    ausgegeben werden.

7.  Verfahren nach Anspruch 6,
    **dadurch gekennzeichnet, dass**
    der Entfernungsschätzwert und der horizontale Peilwinkel in einer einer Ansicht von oben entsprechenden zweidimensionalen Darstellung ausgegeben werden, wobei bei nur teilweiser Übereinstimmung von Spektralmerkmalen eine speichenartige Linie (47) mit mehreren Entfernungsmarken (48, 49, 50) dargestellt wird.

8.  Sonaranlage zum passiven Bestimmen von wenigstens der Entfernung zu und der Position von einem schallabstrahlenden Ziel (11) mittels einer einem ersten Sonarteilsystem (21) zugeordneten ersten Empfangsantenne (12) mit einer Vielzahl von entlang einer Linie angeordneten elektroakustischen Wandlern zum Empfangen von Schallwellen und Erzeugen von elektrischen Empfangssignalen, wobei das erste Sonarteilsystem (21) als ein in Elevation auflösendes Sonarteilsystem (21) ausgebildet ist, mittels dem bei vertikal ausgerichteter Empfangsantenne (12) ein in einer Vertikalebene liegender Elevationswinkel ($\xi_2$) zwischen einer Horizontalebene und dem Ziel (11) bestimmbar ist,
    **dadurch gekennzeichnet, dass**

    - die Sonaranlage (20) ferner eine zweite Empfangsantenne (23) eines zweiten Sonarteilsystems (22) umfasst, die ebenfalls eine Vielzahl von elektroakustischen Wandlern zum Empfangen von Schallwellen und Erzeugen von elektrischen Empfangssignalen aufweist,
    - das zweite Sonarteilsystem (22) ein in Azimut auflösendes Sonarteilsystem ist, mit dem ein in einer Horizontalebene liegender horizontaler Peilwinkel zwischen einer in der Horizontalebene liegenden Bezugsrichtung und einem Ziel (11) bestimmbar ist,
    - in Abhängigkeit vom Elevationswinkel ($\xi_2$) und einer vertikalen Lage des Ziels sowie unter Berücksichtigung der Tiefe (T+D) des akustischen Schwerpunkts (16) der ersten Empfangsantenne (12) ein Entfernungsschätzwert (A) einer Entfernung zu diesem Ziel (11) ermittelbar ist und
    - die Sonaranlage Mittel zum Bestimmen der Position des Ziels aus dem Entfernungsschätzwert und dem horizontalen Peilwinkel aufweist.

9.  Sonaranlage nach Anspruch 8,
    **dadurch gekennzeichnet, dass**
    die erste Empfangsantenne (12) eine Linearantenne, nämlich eine hinter einem Wasserfahrzeug nachschleppbare Schleppantenne und die zweite Empfangsantenne (23) eine fest an einem Wasserfahrzeug eingebaute Antenne, nämlich eine Seitenantenne, eine Zylinderbasis oder eine Hufeisenbasis, ist.

10. Sonaranlage nach Anspruch 8 oder 9,
    **dadurch gekennzeichnet, dass**
    mittels des ersten Sonarteilsystems (21) der Entfernungsschätzwert aus einem Schnitt der Wasseroberflächenebene mit einer sich aus einer Rotation einer dem Elevationswinkel ($\xi_2$) entsprechenden, auf das Ziel (11) weisenden Geraden um eine senkrechte Rotationsachse ergebenden Kegelmantelfläche ermittelbar ist.

11. Sonaranlage nach Anspruch 8 oder 9,
    **dadurch gekennzeichnet, dass**
    die Tiefe des Ziels bestimmbar und der Entfernungsschätzwert aus einem Schnitt einer der Tiefe des Ziels entsprechenden Horizontalebene mit einer sich aus einer Rotation einer dem Elevationswinkel

($\xi_2$) entsprechenden, auf das Ziel (11) weisenden Geraden um eine senkrechte Rotationsachse ergebenden Kegelmantelfläche ermittelbar ist.

12. Sonaranlage nach einem der Ansprüche 8 bis 11, **dadurch gekennzeichnet, dass**

- das erste Sonarteilsystem (21) eine Signalverarbeitungseinrichtung (24) aufweist zur Durchführung einer Signalverarbeitung der einem Ziel (11) zugeordneten Signale der ersten Empfangsantenne (12) und einen ersten Spektralanalysator (39) zur Erzeugung eines ersten, diesem ersten Sonarteilsystem (21) zugeordneten Spektrums aufweist,
- das zweite Sonarteilsystem (22) eine Signalverarbeitungseinrichtung (25) zur Durchführung einer Signalverarbeitung der einem Ziel (11) zugeordneten Signale der zweiten Empfangsantenne (23) und einen zweiten Spektralanalysator (40) zur Erzeugung eines zweiten, diesem zweiten Sonarteilsystem (22) zugeordneten Spektrums aufweist,
- die Sonaranlage (20) Mittel zum Vergleichen (41) des ersten Spektrums mit dem zweiten Spektrum und zum Ermitteln etwaiger Übereinstimmungen der Spektren in Spektralmerkmalen aufweist und
- Mittel zum Zuordnen (42) eines mittels des ersten Sonarteilsystems (21) erhaltenen Entfernungsschätzwertes zu einem mittels des zweiten Sonarteilsystems (22) erhaltenen horizontalen Peilwinkels bei festgestellter Übereinstimmung von Spektralmerkmalen aufweist.

13. Sonaranlage nach Anspruch 11 oder 12, **dadurch gekennzeichnet, dass** die Sonaranlage (20) eine Anzeigevorrichtung (43) zum Ausgeben des Entfernungsschätzwertes und des horizontalen Peilwinkels aufweist, wobei die Anzeigevorrichtung derart betreibbar ist, dass

a) bei einer festgestellten Übereinstimmung von Spektralmerkmalen eine Marke (44, 45) mit horizontalem Peilwinkel und Entfernungsschätzwert,
b) bei fehlender Übereinstimmung von Spektralmerkmalen eine Markierung (51) mit horizontalem Peilwinkel, jedoch ohne Entfernungsschätzwert und/oder
c) bei teilweiser Übereinstimmung von Spektralmerkmalen eine Markierung (47) mit horizontalem Peilwinkel und mehreren Entfernungsmarken (48, 49, 50)

ausgebbar ist.

14. Sonaranlage nach Anspruch 13,

**dadurch gekennzeichnet, dass**
die Anzeigevorrichtung derart betreibbar ist, dass der Entfernungsschätzwert und der horizontale Peilwinkel in einer einer Ansicht von oben entsprechenden zweidimensionalen Darstellung ausgebbar sind, wobei bei nur teilweiser Übereinstimmung von Spektralmerkmalen eine speichenartige Linie (47) mit mehreren Entfernungsmarken (48, 49, 50) darstellbar ist.

_Fig. 1_

*Fig. 2*

Fig. 3

Europäisches
Patentamt

European
Patent Office

Office européen
des brevets

**EUROPÄISCHER RECHERCHENBERICHT**

Nummer der Anmeldung

EP 08 01 0554

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | DESHARNAIS F ET AL: "A generalized beamformer for tracking tonal sources" OCEANS 2006, IEEE, PI, 1. September 2006 (2006-09-01), Seiten 1-5, XP031046527 ISBN: 978-1-4244-0114-7 * das ganze Dokument * ----- | 1-14 | INV. G01S5/28 |
| A,D | DE 198 25 886 A1 (STN ATLAS ELEKTRONIK GMBH [DE]) 23. Dezember 1999 (1999-12-23) * das ganze Dokument * ----- | 1-14 | |
| D,A | DE 40 41 590 A1 (STN ATLAS ELEKTRONIK GMBH [DE]) 28. August 1997 (1997-08-28) * das ganze Dokument * ----- | 1-14 | |
| A | DE 101 28 973 C1 (STN ATLAS ELEKTRONIK GMBH [DE]) 25. Juli 2002 (2002-07-25) * das ganze Dokument * ----- | 1-14 | |
| A | US 2004/090864 A1 (LAROSA VICTOR P [US] ET AL) 13. Mai 2004 (2004-05-13) * Zusammenfassung; Abbildungen 4a-5,7 * * Absätze [0061] - [0064] * * Absätze [0073] - [0083] * ----- | 1-14 | RECHERCHIERTE SACHGEBIETE (IPC) G01S B63G |
| A | US 5 040 157 A (RODERICK WILLIAM I [US] ET AL) 13. August 1991 (1991-08-13) * das ganze Dokument * ----- -/-- | 1-14 | |

Der vorliegende Recherchenbericht wurde für alle Patentansprüche erstellt

| Recherchenort | Abschlußdatum der Recherche | Prüfer |
|---|---|---|
| München | 19. November 2008 | Zaneboni, Thomas |

EPO FORM 1503 03.82 (P04C03)

Europäisches
Patentamt
European
Patent Office
Office européen
des brevets

**EUROPÄISCHER RECHERCHENBERICHT**

Nummer der Anmeldung

EP 08 01 0554

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SOARES CRISTIANO ET AL: "Source localization in a time-varying ocean waveguide" JOURNAL OF THE ACOUSTICAL SOCIETY OF AMERICA, AIP / ACOUSTICAL SOCIETY OF AMERICA, MELVILLE, NY, US, Bd. 112, Nr. 5, 1. November 2002 (2002-11-01), Seiten 1879-1889, XP012003122 ISSN: 0001-4966 * das ganze Dokument * ----- | 1-14 | |
| A | WO 96/20415 A (THOMSON CSF [FR]; GRALL GEORGES [FR]) 4. Juli 1996 (1996-07-04) * Abbildung 3 * ----- | 1-14 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 19. November 2008 | Zaneboni, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 0554

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-11-2008

| Im Recherchenbericht angeführtes Patentdokument | Datum der Veröffentlichung | Mitglied(er) der Patentfamilie | Datum der Veröffentlichung |
|---|---|---|---|
| DE 19825886 A1 | 23-12-1999 | EP 0964264 A2 | 15-12-1999 |
| DE 4041590 A1 | 28-08-1997 | KEINE | |
| DE 10128973 C1 | 25-07-2002 | AT 361872 T<br>AU 784786 B2<br>AU 4445802 A<br>EP 1266823 A2<br>ES 2283478 T3 | 15-06-2007<br>22-06-2006<br>19-12-2002<br>18-12-2002<br>01-11-2007 |
| US 2004090864 A1 | 13-05-2004 | KEINE | |
| US 5040157 A | 13-08-1991 | KEINE | |
| WO 9620415 A | 04-07-1996 | CA 2208982 A1<br>EP 0800656 A1<br>FR 2729041 A1<br>US 5856954 A | 04-07-1996<br>15-10-1997<br>05-07-1996<br>05-01-1999 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19825271 C1
- US 4910719 A
- DE 19825886 C2
- US 5034930 A
- US 4312053 A
- US 5357484 A
- DE 4041590 A1